# EUROPEAN PATENT APPLICATION

(11) **EP 2 778 886 A2**
(43) Date of publication of application: **17.09.2014**
(21) Application number: 14159894.6
(22) Date of filing: 14.03.2014
(51) Int. Cl.: G06F 3/0488

(54) **Mobile device of executing action in display unchecking mode and method of controlling the same**

(30) Priority: 14.03.2013 KR 20130027586
(71) Applicant: Samsung Electronics Co., Ltd., Suwon-si Gyeonggi-do 443-742 (KR)
(72) Inventor: Won, Sung-Joon, 443-742 Gyeonggi-do (KR)
(74) Representative: Nederlandsch Octrooibureau

(57) **Abstract**

A mobile device of executing an action in a display unchecking mode and a method of controlling the same are provided. The method includes detecting a display unchecking mode trigger, entering into the display unchecking mode, upon detection of the display unchecking mode trigger, detecting a predetermined execution trigger in the display unchecking mode, and executing a predetermined action corresponding to the predetermined execution trigger, upon the detecting of the predetermined execution trigger.

## Description

### TECHNICAL FIELD

The present disclosure relates to a mobile device and a method of controlling the same. For example, the present disclosure relates to a mobile device of executing an action in a display unchecking mode and a method of controlling the same.

### BACKGROUND

Mobile device technology has recently developed rapidly. Particularly, a mobile device is equipped with a touch screen so that a user can input an intended command to the mobile device simply by touching the touch screen.

When the user applies a touch input through the touch screen, the user is generally required to view the touch screen, which is rather inconvenient. For example, to execute a music application, the user should view an icon representing the music application and then touch the icon.

If the user carries the mobile device in a pocket and thus does not view the touch screen of the mobile device, the user cannot input an intended command to the touch screen.

Accordingly, there exists a need for a technique of enabling a user to input an intended command to a touch screen of a mobile device, when the user is placed in a situation in which the user cannot view the touch screen.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a technique of enabling a user to control a mobile device without viewing a display of the mobile device by switching the mobile device to a display unchecking mode.

In accordance with an aspect of the present disclosure, a method of controlling a mobile device that executes an action in a display unchecking mode is provided. The method includes detecting a display unchecking mode trigger, entering into the display unchecking mode, upon detection of the display unchecking mode trigger, detecting a predetermined execution trigger in the display unchecking mode, and executing a predetermined action corresponding to the predetermined execution trigger, upon the detecting of the predetermined execution trigger.

In accordance with another aspect of the present disclosure, a mobile device of executing an action in a display unchecking mode is provided. The mobile device includes a controller configured to detect a display unchecking mode trigger, to enter into the display unchecking mode, upon detection of the display unchecking mode trigger, to detect a predetermined execution trigger in the display unchecking mode, and to execute a predetermined action corresponding to the predetermined execution trigger, upon the detection of the predetermined execution trigger, a touch screen configured to display a screen of the mobile device, and a memory configured to store information about the predetermined action corresponding to the predetermined execution trigger.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of a mobile device according to an embodiment of the present disclosure;
FIG. 2 is a front perspective view of a mobile device according to an embodiment of the present disclosure;
FIG. 3 is a rear perspective view of a mobile device according to an embodiment of the present disclosure;
FIG. 4 is a flowchart illustrating a method of controlling a mobile device that executes an action in a display unchecking mode according to an embodiment of the present disclosure;
FIGS. 5A, 5B, 5C, 5D, 6A, 6B, 6C,and 6D illustrate operations in a method of controlling a mobile device that executes an action in a display unchecking mode according to an embodiment of the present disclosure;
FIGS. 7A, 7B, 7C,and 7D illustrate an operation in a method of controlling a mobile device that executes an action in a display unchecking mode according to an embodiment of the present disclosure;
FIGS. 8A, 8B, 8C, 8D, 9A, 9B, 9C,and 9D illustrate an operation in a method of controlling a mobile device that executes an action in a display unchecking mode according to an embodiment of the present disclosure;
FIGS. 10A, 10B, 10C, 10D, 10E,and 10F illustrate an operation in a method of controlling a mobile device that executes an action in a display unchecking mode according to an embodiment of the present disclosure;
FIGS. 11A, 11B, 11C, and 11D illustrate an operation in a method of controlling a mobile device that executes an action in a display unchecking mode according to an embodiment of the present disclosure;
FIGS. 12A, 12B, 12C, 12D, 12E, and 12F illustrate operation in a method of controlling a mobile device that executes an action in a display unchecking mode according to an embodiment of the present disclosure;
FIGS. 13A, 13B, 13C, and 13D illustrate an operation in a method of controlling a mobile device that executes an action in a display unchecking mode according to an embodiment of the present disclosure; and
FIGS. 14A, 14B, 14C, 15A, 15B, 15C, 15D, 16A, 16B, 16C, and 16D illustrate an operation in a method of controlling a mobile device that executes an action in a display unchecking mode according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

While ordinal numbers like first, second, and the like can be used to describe a number of components, such components are not limited by the terms. The terms are used to distinguish one component from other components. For example, a first component may be referred to as a second component or vice versa within the scope and spirit of the present disclosure. The term 'and/or' means inclusion of a combination of a plurality of described associated items or one of the items.

The technical terms used herein are provided simply to describe specific various embodiments, not intended to restrict the present disclosure. Herein, singular expressions include plural expressions unless otherwise clarified in the context. In this description, the term 'include' or 'have' is not interpreted as necessarily including all of the features, numbers, operations, components, parts, or a combination thereof described in the specification. Rather, it should be understood that there are possibilities of omitting or adding one or more features, numbers, operations, components, parts, or combinations thereof.

Unless otherwise defined, all the terms used herein including technical or scientific terms have the same meanings as terms generally understood by those skilled in the art. In addition, terms defined in a general dictionary should be understood so as to have the same meanings as contextual meanings of the related art. Unless definitely defined herein, the terms should not be interpreted as ideal or excessively formal meanings.

In various embodiments of the present disclosure, an electronic device is any of a Personal Computer (PC), a mobile device such as a cellular phone, a Personal Digital Assistant (PDA), a digital camera, a portable game console, an MP3 player, a Portable/Personal Multimedia Player (PMP), a handheld e-book, a tablet PC, a portable lap-top PC, and a Global Positioning System (GPS) navigation, a smart TV, and the like. While the following description is given in the context of a mobile device, it is to be understood that the present disclosure is not limited to the mobile device.

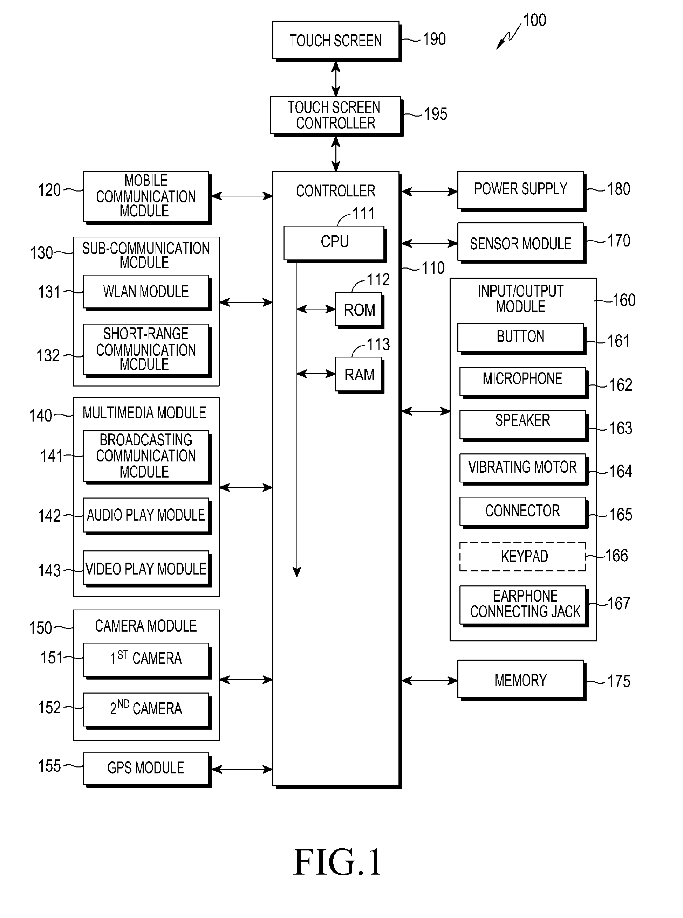

FIG. 1 is a block diagram of a mobile device according to an embodiment of the present disclosure.

Referring to FIG. 1, the mobile device 100 may include a controller 110, a mobile communication module 120, a sub-communication module 130, a multimedia module 140, a camera module 150, a GPS module 155, an Input/Output (I/O) module 160, a sensor module 170, a memory 175, a power supply 180, a touch screen 190, a touch screen controller 195, and the like.

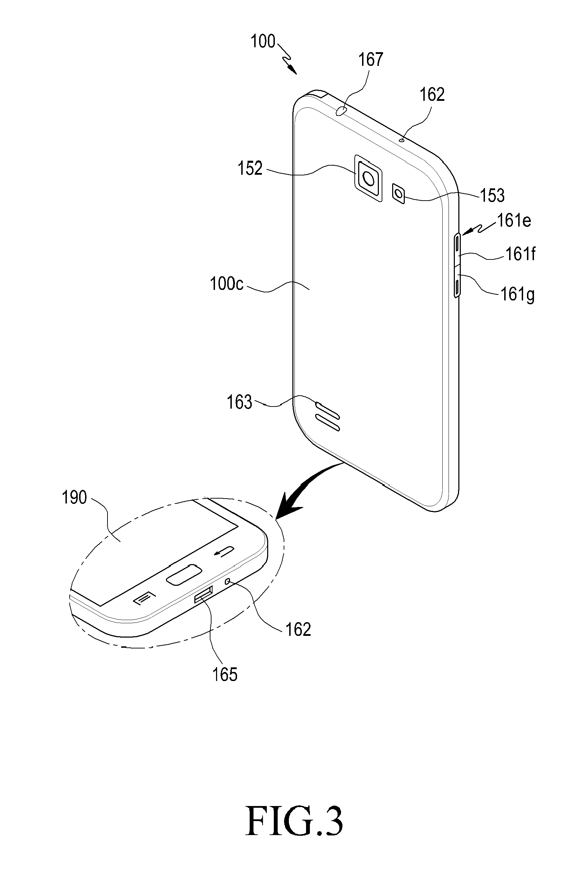

The mobile device 100 may be connected to an external device (not shown) through an external device interface such as the sub-communication module 130, a connector 165, and an earphone connector jack 167 (shown in FIG. 3). The term 'external device' covers a variety of devices that can be detachably connected to the mobile device 100 by wire, such as an earphone, an external speaker, a Universal Serial Bus (USB) memory, a charger, a cradle, a docking station, a Digital Multimedia Broadcasting (DMB) antenna, a mobile payment device, a health care device (e.g., a blood sugar meter, and/or the like), a game console, a vehicle navigator, and the like. The 'external device' may include a device wirelessly connectable to the mobile device 100 by short-range communication, such as a Bluetooth communication device, a Near Field Communication (NFC) device, a Wireless Fidelity (Wi-Fi) Direct communication device, a wireless Access Point (AP), and the like. In addition, the external device may be any of another mobile device, a portable phone, a smart phone, a tablet PC, a desktop PC, a server, and the like.

The sub-communication module 130 includes at least one of a Wireless Local Area Network (WLAN) module 131 and a short-range communication module 132.

The multimedia module 140 may include at least one of a broadcasting communication module 141, an audio play module 142, and a video play module 143.

The camera module 150 may include at least one of a first camera 151 and a second camera 152.

The I/O module 160 may include at least one of buttons 161, a microphone 162, a speaker 163, a vibration motor 164, the connector 165, a keypad 166, and the earphone connector jack 167.

The following description is given with the appreciation that the display 190 and the display controller 195 are a touch screen and a touch screen controller, respectively, by way of example.

The controller 110 may include a Central Processing Unit (CPU) 111, a Read Only Memory (ROM) 112 that stores a control program to control the mobile device 100, and a Random Access Memory (RAM) 113 that stores signals or data received from the outside of the mobile device 100 or for use as a memory space for an operation performed by the mobile device 100. The CPU 111 may include one or more cores. The CPU 111, the ROM 112, and the RAM 113 may be connected to one another through an internal bus.

The controller 110 may control the mobile communication module 120, the sub-communication module 130, the multimedia module 140, the camera module 150, the GPS module 155, the I/O module 160, the sensor module 170, the memory 175, the power supply 180, the touch screen 190, and the touch screen controller 195.

The mobile communication module 120 may connect the mobile device 100 to an external device through one or more antennas (not shown) by mobile communication under the control of the controller 110. The mobile communication module 120 transmits wireless signals to or receives wireless signals from a portable phone (not shown), a smart phone (not shown), a tablet PC (not shown), or another mobile device (not shown) that has a phone number input to the mobile device 100, for a voice call, a video call, a Short Message Service (SMS), or a Multimedia Messaging Service (MMS).

The sub-communication module 130 may include at least one of the WLAN module 131 and the short-range communication module 132.

The WLAN module 131 may be connected to the Internet under the control of the controller 110 in a place in which a wireless AP (not shown) is installed. The WLAN module 131 supports the WLAN standard, Institute of Electrical and Electronics Engineers (IEEE) 802.11x. The short-range communication module 132 may conduct short-range wireless communication between the mobile device 100 and another device such as, for example, an image forming device (not shown) under the control of the controller 110. The short-range communication may conform to Bluetooth, Infrared Data Association (IrDA), Wi-Fi Direct, NFC, and the like.

The mobile device 100 may include at least one of the mobile communication module 120, the WLAN module 131, and the short-range communication module 132 according to the capabilities of the mobile device 100. For example, the mobile device 100 may include a combination of the mobile communication module 120, the WLAN module 131, and the short-range communication module 132 according to the capabilities of the mobile device 100.

The multimedia module 140 may include the broadcasting communication module 141, the audio play module 142, and/or the video play module 143. The broadcasting communication module 141 may receive a broadcast signal (e.g., a TV broadcast signal, a radio broadcast signal, a data broadcast signal, and/or the like) and additional broadcasting information (e.g., an Electronic Program Guide (EPG), Electronic Service Guide (ESG), and/or the like) from a broadcasting station through a broadcasting communication antenna (not shown) under the control of the controller 110. The audio play module 142 may open a stored or received digital audio file (e.g., a file having such an extension as mp3, wma, ogg, wav, or the like) under the control of the controller 110. The video play module 143 may open a stored or received digital video file (e.g., a file having an extension such as mpeg, mpg, mp4, avi, mov, mkv, or the like) under the control of the controller 110. The video play module 143 may also open a digital audio file.

The multimedia module 140 may include the audio play module 142 and the video play module 143 without the broadcasting communication module 141. Alternatively, the audio play module 142 or the video play module 143 of the multimedia module 140 may be incorporated into the controller 110.

The camera module 150 may include at least one of the first camera 151 and the second camera 152, to capture a still image or a video under the control of the controller 110. The first camera 151 or the second camera 152 may include an auxiliary light source (e.g., a flash (not shown)) to provide a light intensity required for capturing an image. The first camera 151 may be disposed on the front surface of the mobile device 100, while the second camera 152 may be disposed on the rear surface of the device 100. Alternatively, the first camera 151 and the second camera 152 may be arranged near to each other (e.g., the distance between the first camera 151 and the second camera 152 may be between 1cm and 8cm) in order to capture a three-dimensional still image or video.

The GPS module 155 may receive signals from a plurality of GPS satellites (not shown) in Earth orbit and calculate a position of the mobile device 100 based on the Time of Arrivals (ToAs) of satellite signals from the GPS satellites to the mobile device 100.

The I/O module 160 may include at least one of the plurality of buttons 161, the microphone 162, the speaker 163, the vibration motor 164, the connector 165, and the keypad 166. The I/O module 160 may also include the earphone connecting jack 167.

The buttons 161 may be formed on the front surface, a side surface, or the rear surface of a housing of the mobile device 100, and may include at least one of a power/lock button, a volume button, a menu button, a home button, a back button, and a search button.

The microphone 162 may receive a voice or a sound and converts the received voice or sound to an electrical signal under the control of the controller 110.

The speaker 163 may output sounds corresponding to various signals (e.g., a wireless signal, a broadcast signal, a digital audio file, a digital video file, a photo shot, and the like) received from the mobile communication module 120, the sub-communication module 130, the multimedia module 140, and the camera module 150 to the outside of the mobile device 100. The speaker 163 may output sounds corresponding to functions (e.g., a button manipulation sound, a ringback tone for a call, and the like) performed by the mobile device 100. One or more speakers 163 may be disposed at an appropriate position or positions of the housing of the mobile device 100.

The vibration motor 164 may convert an electrical signal to a mechanical vibration under the control of the controller 110. For example, when the mobile device 100 receives an incoming voice call from another mobile device (not shown) in a vibration mode, the vibration motor 164 operates. One or more vibration motors 164 may be mounted inside the housing of the mobile device 100. The vibration motor 164 may operate in response to a user's touch on the touch screen 190 and a continuous movement of the touch on the touch screen 190.

The connector 165 may be used as an interface to connecting the mobile device 100 to an external device (not shown) and/or a power source (not shown). The connector 165 may transmit data stored in the memory 175 to the external device via a cable connected to the connector 165 or may receive data from the external device via the cable, under the control of the controller 110. The external device may be a docking station and the data may be a signal received from an external input device(e.g., a mouse, a keyboard, and/or the like). The mobile device 100 may receive power or charge a battery (not shown) from the power source via the cable connected to the connector 165.

The keypad 166 may receive a key input from the user to control the mobile device 100. The keypad 166 may include a physical keypad (not shown) formed in the mobile device 100 or a virtual keypad (not shown) displayed on the display 190. The physical keypad may not be provided according to the capabilities or configuration of the mobile device 100.

An earphone (not shown) may be inserted into the earphone connector jack 167 and thus connected to the mobile device 100.

The sensor module 170 may include at least one sensor (not shown) to detect a state of the mobile device 100. For example, the sensor module 170 may include a proximity sensor that detects whether the user is close to the mobile device 100, an illuminance sensor that detects the amount of ambient light around the mobile device 100, a gyro sensor that may detect a motion of the mobile device 100 (e.g., rotation, acceleration, vibration of the mobile device 100, and/or the like), a point of the compass using the earth's magnetic field, and the direction of gravity, an altimeter that detects an altitude by measuring the air pressure, and/or the like. At least one sensor may detect a state of the mobile device 100, generate a signal corresponding to the detected state, and transmit the generated signal to the controller 110. A sensor may be added to or removed from the sensor module 170 according to the capabilities of the mobile device 100.

The memory 175 may store input/output signals or data in accordance with operations of the mobile communication module 120, the sub-communication module 130, the multimedia module 140, the camera module 150, the GPS module 155, the I/O module 160, the sensor module 170, and the touch screen 190 under the control of the controller 110. The memory 175 may store a control program to control the mobile device 100 or the controller 110, and applications.

The term "memory" corresponds to the memory 175, the ROM 112 and the RAM 113 within the controller 110, or a memory card (not shown) (e.g., a Secure Digital (SD) card, a memory stick, and/or the like) mounted to the mobile device 100. The memory may include a non-volatile memory, a volatile memory, a Hard Disk Drive (HDD), or a Solid State Drive (SSD).

The power supply 180 may supply power to one or more batteries (not shown) mounted in the housing of the mobile device 100 under the control of the controller 110. The one or more batteries supply power to the mobile device 100. Further, the power supply 180 may supply power received from an external power source (not shown) via the cable connected to the connector 165 to the mobile device 100. The power supply 180 may also supply power received wirelessly from the external power source to the mobile device 100 by a wireless charging technology.

The touch screen 190 may provide User Interfaces (UIs) corresponding to various services (e.g., call, data transmission, broadcasting, photography, and/or the like) to the user. The touch screen 190 may transmit an analog signal corresponding to at least one touch on a UI to the touch screen controller 195. The touch screen 190 may receive at least one touch input through a user's body part (e.g., a finger, and/or the like) or a touch input tool (e.g., a stylus pen, and/or the like). The touch screen 190 may also receive a touch input signal corresponding to a continuous movement of a touch among one or more touches. The touch screen 190 may transmit an analog signal corresponding to the continuous movement of the input touch to the touch screen controller 195.

As used in this description, 'touch' may include a non-contact touch, and need not be limited to contacts between the touch screen 190 and the user's body part or the touch input tool. A gap detectable to the touch screen 190 may vary according to the capabilities or configuration of the mobile device 100.

The touch screen 190 may be implemented as, for example, a resistive type, a capacitive type, an infrared type, an acoustic wave type, or the like.

The touch screen controller 195 converts an analog signal received from the touch screen 190 to a digital signal (e.g., X and Y coordinates). The controller 110 may control the touch screen 190 using the digital signal received from the touch screen controller 195. For example, the controller 110 may control selection or execution of a shortcut icon (not shown) displayed on the touch screen 190 in response to a touch. The touch screen controller 195 may be incorporated into the controller 110.

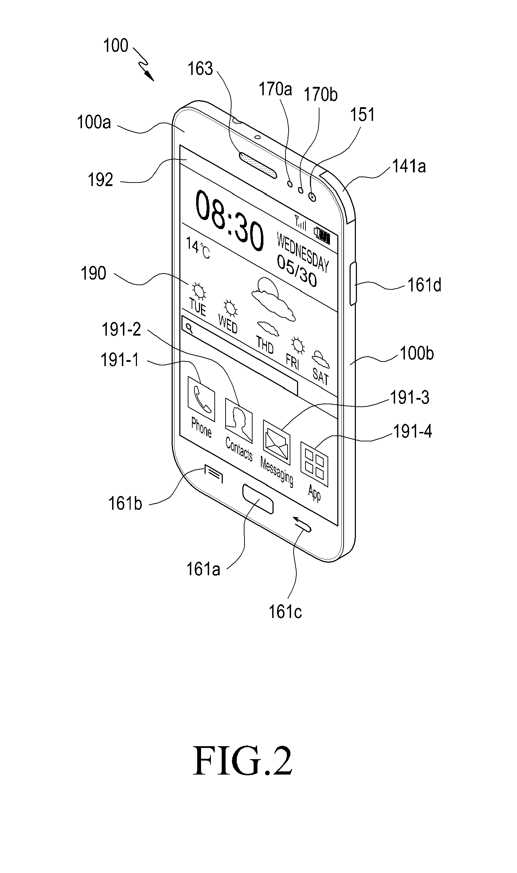

FIG. 2 is a front perspective views of a mobile device according to an embodiment of the present disclosure.FIG. 3 is a rear perspective view of a mobile device according to an embodiment of the present disclosure.

Referring to FIG. 2, the touch screen 190 may be disposed at the center of the front surface 100a of the mobile device 100, occupying almost the entirety of the front surface 100a. In FIG. 2, a main home screen may be displayed on the touch screen 190, by way of example. For example, the main home screen may be the first screen to be displayed on the touch screen 190, when the mobile device 100 is powered on. If the mobile device 100 has different home screens of a plurality of pages, the main home screen may be the first of the home screens of the plurality of pages. Shortcut icons 191-1, 191-2 and 191-3 used to execute frequently used applications, an application switch key 191-4, time, weather, and the like may be displayed on the home screen. The application switch key 191-4 is used to display application icons representing applications on the touch screen 190. A status bar 192 may be displayed at the top of the touch screen 190 in order to indicate states of the mobile device 100 such as a battery charged state, a received signal strength, a current time, and/or the like.

A home button 161a, a menu button 161b, and a back button 161c may be formed at the bottom of the touch screen 190.

The home button 161a is used to display the main home screen on the touch screen 190. For example, upon pressing (or touching) of the home button 161a while any home screen other than the main home screen or a menu screen is displayed on the touch screen 190, the main home screen may be displayed on the touch screen 190. Upon pressing (or touching) of the home button 161a during execution of applications on the home screen 190, the main home screen illustrated in FIG. 2 may be displayed on the touch screen 190. The home button 161a may also be used to display recently used applications or a task manager on the touch screen 190.

The menu button 161b provides link menus available on the touch screen 190. The link menus may include a widget adding menu, a background changing menu, a search menu, an edit menu, an environment setting menu, and the like. During execution of an application, the menu button 161b may provide a link menu linked to the application.

The back button 161c may display the screen previous to a current screen or end the latest used application.

The first camera 151, an illuminance sensor 170a, and a proximity sensor 170b may be arranged at a corner of the front surface 100a of the mobile device 100.A speaker 163 may also be arranged on the front surface 100a of the mobile device 100. The second camera 152, a flash 153, and the speaker 163 may be arranged on the rear surface 100c of the mobile device 100.

For example, a power/reset button 161d, a volume button 161e, a terrestrial DMB antenna 141 a that receives a broadcast signal, and one or more microphones 162 may be disposed on side surfaces 100b of the mobile device 100. The DMB antenna 141a may be mounted to the mobile device 100 fixedly or detachably. The volume button 161e may include a volume up button 161f and a volume down button 161g.

The connector 165 is formed on the bottom side surface of the mobile device 100. The connector 165 may include a plurality of electrodes and may be connected to an external device by wire. The earphone connector jack 167 may be formed on the top side surface of the mobile device 100, in order to allow an earphone to be inserted.

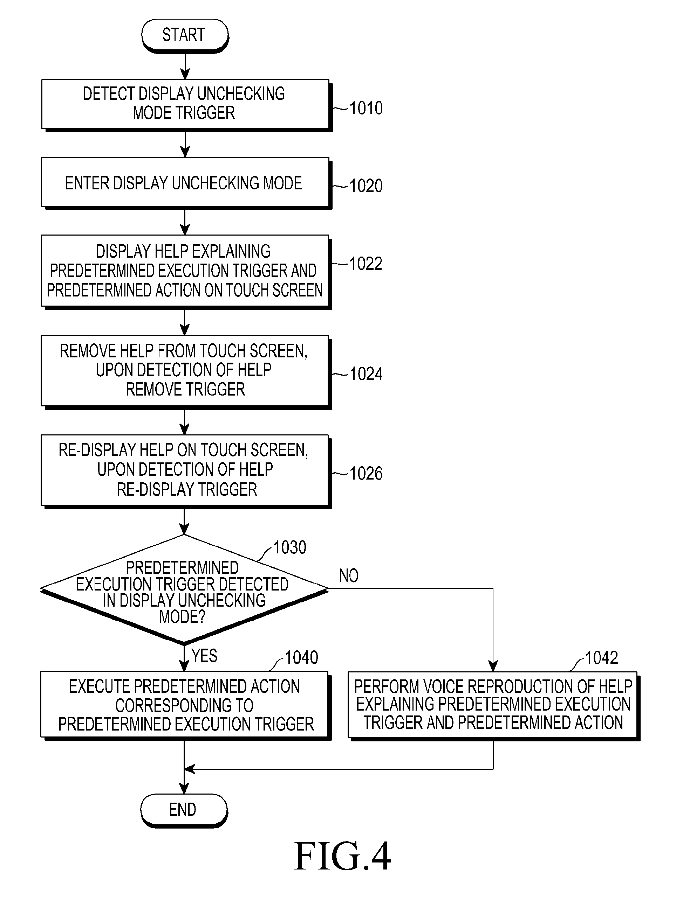

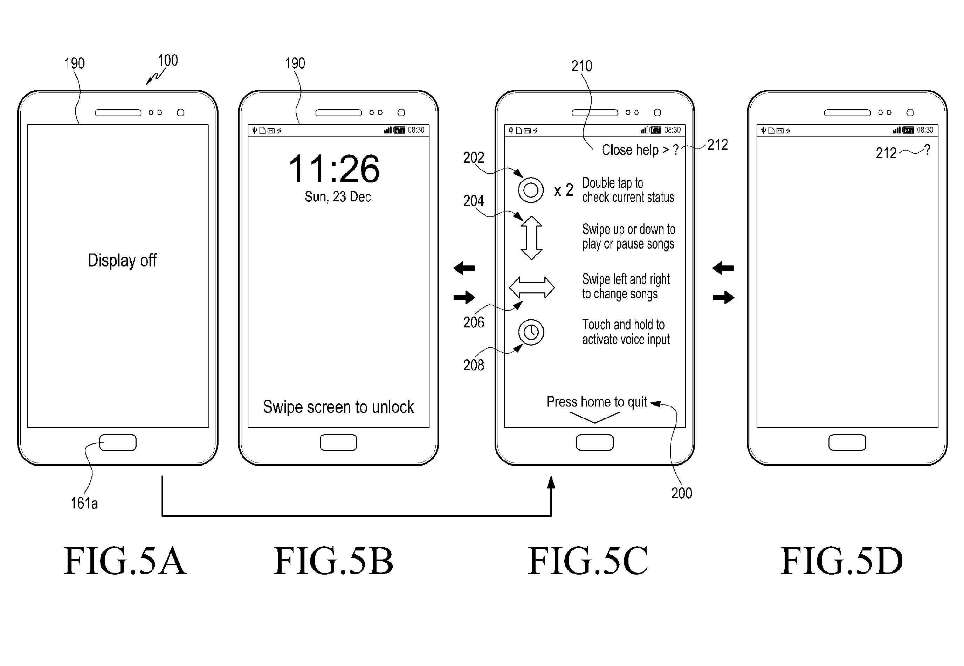

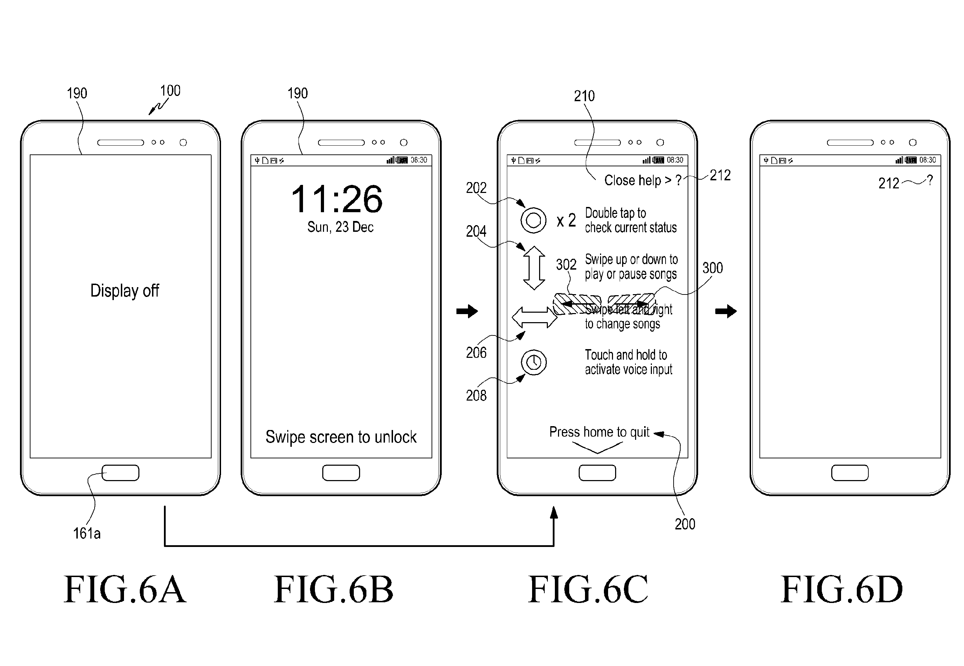

FIG. 4 is a flowchart illustrating a method of controlling a mobile device that executes an action in a display unchecking mode according to an embodiment of the present disclosure. FIGS. 5A, 5B, 5C, 5D, 6A, 6B, 6C, and 6D illustrate operations in the method of controlling a mobile device that executes an action in a display unchecking mode according to an embodiment of the present disclosure.

Referring to FIG. 4, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may bepressing of the home button 161a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 5A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. As an example, upon detection of an unlocking trigger, a swipe across the touch screen 190, the mobile device 100 may be unlocked. For example, as illustrated in FIG. 5B, the controller 110 may detect, as the display unchecking mode trigger, pressing of the home button 161a that lasts the predetermined time or longer in the locked state.

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. For example, the display unchecking mode means a mode in which the user can control the mobile device without viewing the display of the mobile device, carrying the mobile device in a pocket. For example, upon detection of a predetermined execution trigger in the display unchecking mode, a predetermined action corresponding to the predetermined execution trigger is executed so that the user can control the mobile device without viewing the display of the mobile device. As illustrated in FIG. 5C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen.

For example, the predetermined execution trigger may be a double tap and the predetermined action corresponding to the predetermined execution trigger may be reproduction of a voice message that explains the state of the mobile device. If the predetermined execution trigger is an upward or downward swipe, a predetermined action corresponding to the upward or downward swipe may be execution or termination of a music application. If the predetermined execution trigger is a leftward or rightward swipe, a predetermined action corresponding to the leftward or rightward swipe may be play of the next or previous music. If the predetermined execution trigger is a touch held for a predetermined time or longer, a predetermined action corresponding to the touch may be entry into a voice input standby state.

Therefore, the controller 110 may display, on the touch screen, a help indication 202 "double tap to check current status" indicating that the predetermined execution trigger is a double tap and the predetermined action corresponding to the predetermined execution trigger is reproduction of a voice message explaining the state of the mobile device, as illustrated in FIG. 5C. If the predetermined execution trigger is an upward or downward swipe, the controller 110 may display a help indication 204 "swipe up or down to play or pause songs" on the touch screen, which indicates that a predetermined action corresponding to the upward or downward swipe is execution or termination of a music application, as illustrated in FIG. 5C. If the predetermined execution trigger is a leftward or rightward swipe, the controller 110 may display a help indication 206 "swipe left or right to change songs" on the touch screen, which indicates that a predetermined action corresponding to the leftward or rightward swipe is play of the next or previous music, as illustrated in FIG. 5C. If the predetermined execution trigger is a touch held for a predetermined time or longer, the controller 110 may display a help indication 208 "touch and hold to activate voice input" on the touch screen, which indicates that a predetermined action corresponding to the touch held for the predetermined time or longer is entry into a voice input standby state, as illustrated in FIG. 5C.

At operation 1024, upon detection of a help remove trigger, the help indication is removed from the touch screen. Upon detection of the help remove trigger, the controller 110 may remove the help indication from the touch screen. The help remove trigger may be selection of a help remove icon or no input for a predetermined time or longer. As illustrated in FIG. 5C, the help indications 202 to 208 are displayed on the touch screen. For example, upon selection of a help remove icon 210 corresponding to the help remove trigger, the controller 110 may remove the helpindications 202 to 208 from the touch screen, as illustrated in FIG. 5D. In another example, if determining the absence of any input for a predetermined time or longer, which corresponds to the help remove trigger, the controller 110 may remove the help indications 202 to 208 from the touch screen, as illustrated in FIG. 5D. For example, when a touch on the touch screen or pressing of a button in the mobile device has not been detected for a predetermined time (e.g., 3 seconds), the controller 110 may determine that no input has been received for the predetermined time.

At operation 1026, upon detection of a help re-display trigger, the help indication is re-displayed on the touch screen. Upon detection of the help re-display trigger, the controller 110 may re-display the help indication on the touch screen. The help re-display trigger may be selection of a help re-display icon. For example, upon selection of a help re-display icon 212 corresponding to the help re-display trigger as illustrated in FIG. 5D, the controller 110 may re-display the help indications 202 to 208 on the touch screen as illustrated in FIG. 5C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a frequently used trigger in the mobile device or a trigger that has been frequently used in a currently executed application. The use frequency and information of the trigger frequently used in the mobile device or the trigger frequently used in a currently executed application may be pre-stored and managed in the memory 175.

For example, the predetermined execution trigger may be a touch on the touch screen. As an example, the touch may be a leftward or rightward swipe. For example, as illustrated in FIG. 6C, the controller 110 may detect a leftward or rightward swipe 302 or 300 as the predetermined execution trigger.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

The action corresponding to the predetermined execution trigger may be determined based on a user information log related to the user or a currently executed application. The action corresponding to the predetermined execution trigger may be determined to be execution of a switching function corresponding to a state of the mobile device. The action corresponding to the predetermined execution trigger may be predefined and stored in the memory 175. The user information log may be pre-stored in the memory 175. The user information log provides information about an action frequently used by the user. Accordingly, the controller 110 reads information about the frequently used action from the memory 174 and executes the frequently used action as the predetermined action. The predetermined action may be determined in relation to a currently executed application. For example, if the currently executed application is a music application, the controller 110 may predetermine an action of playing the next or previous music as the predetermined action. The predetermined action may be execution of a switching function corresponding to a state of the mobile device. For example, the mobile device may be placed in a low battery state. Then the predetermined action may be execution of a power save mode corresponding to the state of the mobile device. In another example, the mobile device may be placed in a Wi-Fi On state. Then the predetermined action may be execution of a power save mode corresponding to the state of the mobile device, display of devices connectable by Wi-Fi, or display of services available by Wi-Fi. The action corresponding to the predetermined execution trigger may be predefined and stored in the memory. For example, the predetermined action corresponding to the predetermined execution trigger may be pre-stored from the mobile device or an application stored in the mobile device and stored in the memory.

Therefore, upon detection of the predetermined execution trigger, the controller 110 executes the predetermined action corresponding to the predetermined execution trigger. For example, if the predetermined execution trigger is a leftward or rightward swipe, the controller 110 may play the next or previous music as the predetermined action corresponding to the leftward or rightward swipe. For example, as illustrated in FIG. 6C, if the predetermined execution trigger is the leftward swipe 302, the controller 110 may play the next music as a predetermined action corresponding to the leftward swipe 302. In another example, as illustrated in FIG. 6C, if the predetermined execution trigger is the rightward swipe 300, the controller 110 may play the previous music as a predetermined action corresponding to the rightward swipe 300.

Therefore, various embodiments of the present disclosure are advantageous in that a user can control the mobile device without viewing the display of the mobile device by switching the mobile device to the display unchecking mode. Specifically, because a predetermined action corresponding to a predetermined execution trigger is executed in the display unchecking mode, the user can control the mobile device without viewing the display of the mobile device.

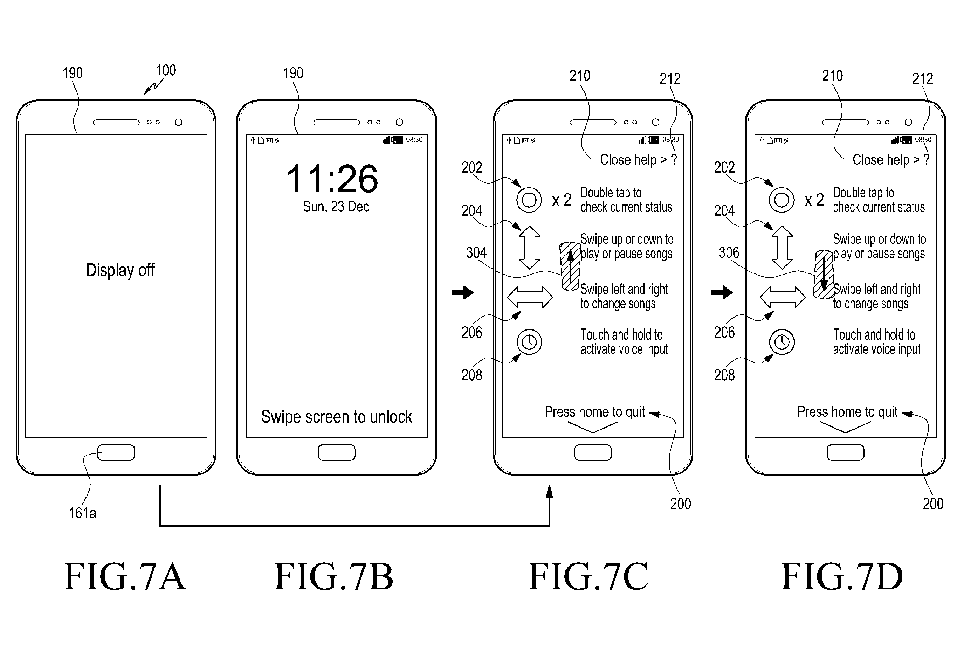

FIGS. 7A,7B, 7C, and 7D illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. The display unchecking mode trigger may be, for example, pressing of the home button 161a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 7A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. For example, upon detection of an unlocking trigger, a swipe across the touch screen, the mobile device 100 may be unlocked. As illustrated in FIG. 7B, for example, the controller 110 may detect, as the display unchecking mode trigger, pressing of the home button 161 a that lasts the predetermined time or longer in the locked state.

Upon detection of the display unchecking mode trigger at operation 1020, the controller 110 proceeds to operation 1022 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIG. 7C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen. For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIG. 7C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIG. 7C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIG. 7C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIG. 7C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a frequently used trigger in the mobile device or a trigger that has been frequently used in a currently executed application. The use frequency and information of the trigger frequently used in the mobile device or the trigger frequently used in a currently executed application may be pre-stored and managed in the memory 175.

For example, the predetermined execution trigger may be a touch on the touch screen. As an example, touch may bean upward or downward swipe. For example, as illustrated in FIG. 7C, the controller 110 may detect an upward swipe 304 as the predetermined execution trigger. In another example, as illustrated in FIG. 7D, the controller 110 may detect a downward swipe 306 as the predetermined execution trigger.

the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, if the predetermined execution trigger is the upward swipe 304 illustrated in FIG. 7C, the controller 110 may execute a music application as a predetermined action corresponding to the upward swipe 304. If the predetermined execution trigger is the downward swipe 306 illustrated in FIG. 7D, the controller 110 may end the music application as a predetermined action corresponding to the downward swipe 306.

Accordingly, various embodiments of the present disclosure are advantageous in that a user can execute or end a music application or play next or previous music without viewing the display of the mobile device by switching the mobile device to the display unchecking mode.

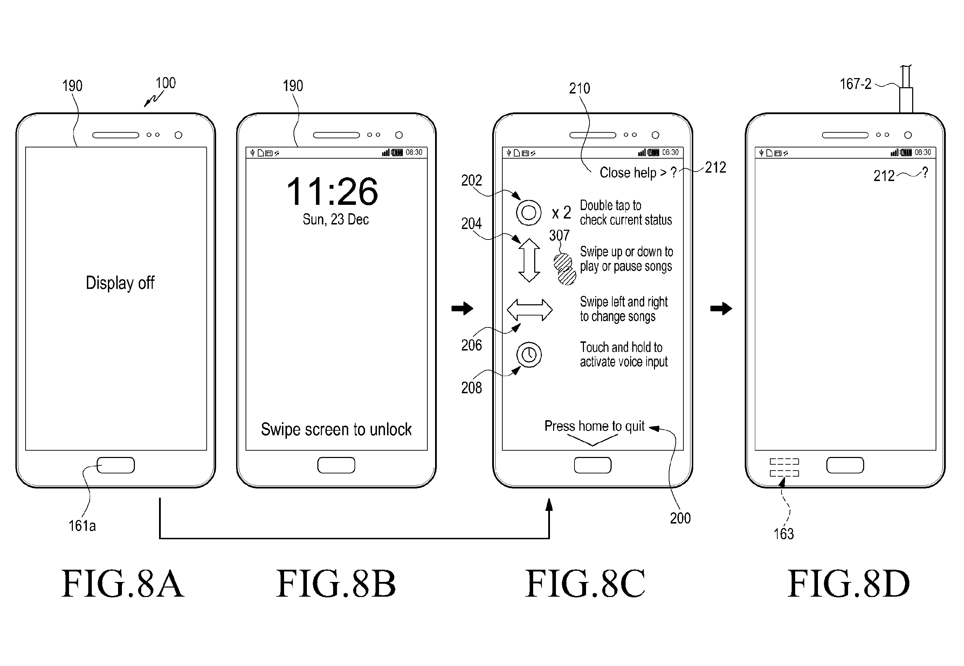

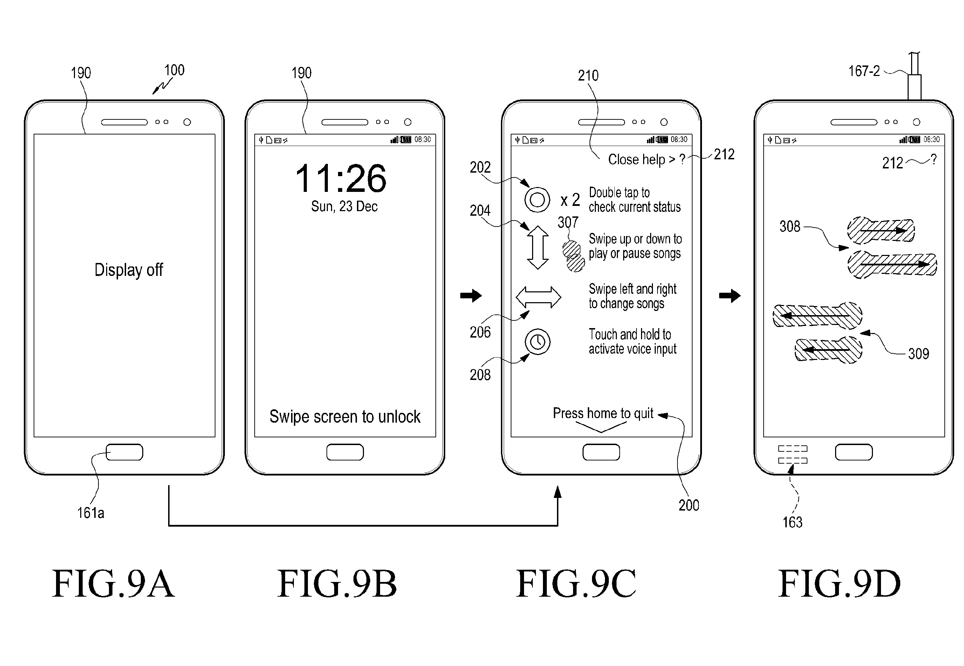

FIGS. 8A, 8B, 8C, 8D, 9A, 9B, 9C, and 9D illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIGS. 8A and 9A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. As an example, upon detection of an unlocking trigger, a swipe across the touch screen 190, the mobile device 100 may be unlocked. For example, as illustrated in FIGS. 8B and 9B, the controller 110 may detect, as the display unchecking mode trigger, pressing of the home button 161a that lasts the predetermined time or longer in the locked state.

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIGS. 8C and 9C, the controller 110 may exit the display unchecking mode upon detection of an input 200. For example, the input may be a preset input to the home button 161a or the like

Thereafter, at operation 1022, a help indication that explains the predetermined execution trigger and the predetermined action is displayed on the touch screen. The controller 110 may display the help indication that explains the predetermined execution trigger and the predetermined action on the touch screen. For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIGS. 8C and 9C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIGS. 8C and 9C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIGS. 8C and 9C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIGS. 8C and 9C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175.

For example, the predetermined execution trigger may be a touch on the touch screen. As an example, the touch may be a double tap. A double tap is to tap the touch screen twice. For example, as illustrated in FIGS. 8C and 9C, the controller 110 may detect a double tap 307 as the predetermined execution trigger.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, if the predetermined execution trigger is the double tap 307 illustrated in FIGS. 8C and 9C, the controller 110 may reproduce a voice message describing a state of the mobile device as a predetermined action corresponding to the double tap 307. As an example, available states of the mobile device may include a current time, a remaining battery power, a received notification, and/or the like. The voice message may be output through an earphone 167-2, if the earphone 167-2 is connected to the mobile device, or may be output through the speaker 163. For example, the voice message may be "It is 12:30 p.m., the remaining battery power is 50%, one call has been received, and there is one new message".

Upon detection of a plurality of rightward swipes 308, the controller 110 may jump in the voice message reproduction (e.g., the controller 110 may advance to a next voice message, or the controller may fast forward a current voice message). Upon detection of a plurality of leftward swipes 309, the controller 110 may rewind the voice message. For example, upon detection of a plurality of rightward swipes 308, the controller 110 may jump in the voice message reproduction as illustrated in FIG. 9D. Because the voice message may be output for a longer time that the user has expected, upon detection of a plurality of rightward swipes 308, the controller 110 may jump in the voice message reproduction so as to shorten the output of the voice message. In contrast, upon detection of a plurality of leftward swipes 309, the controller 110 may rewind the voice message as illustrated in FIG. 9D. Because the user may want to listen to the voice message again, upon detection of a plurality of leftward swipes 309, the controller 110 may rewind the voice message and then replay the voice message.

The voice message may be replayed in a full mode or compact mode. For example, if the voice message is "It is 12:30 p.m., the remaining battery power is 50%, one call has been received, and there is one new message", the voice message may be reduced to contents associated with the incoming call and the new message in the compact play mode. Thus, the controller 110 may provide the user with important information in brief by playing the voice message in the compact mode. The full play mode or the compact play mode may be set preliminarily or selected according to the state of the mobile device or a currently executed application. For example, upon detecting that the user is running and carrying the mobile device through the sensor module 170, the controller 110 may determine to play the voice message in the compact mode. In another example, if the controller 110 determines from a calendar application that the user is participating in a meeting, the controller 110 may determine to play the voice message in the compact mode. In another example, if a call is incoming or a call is being conducted, the controller 110 may determine to play the voice message in the compact mode.

Accordingly, various embodiments of the present disclosure are advantageous in that a user can play a voice message explaining a state of the mobile device without viewing the display of the mobile device by switching the mobile device to the display unchecking mode.

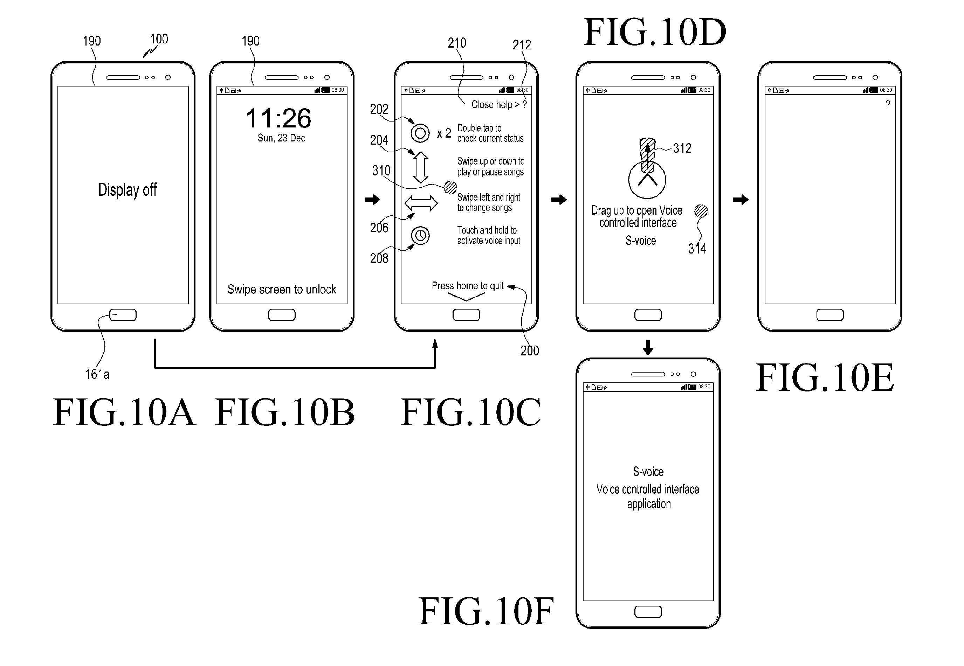

FIGS. 10A 10B, 10C, 10D, 10E, and 10F illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 10A the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. As an example, upon detection of an unlocking trigger, a swipe across the touch screen 190, the mobile device 100 may be unlocked. For example, as illustrated in FIG. 10B, the controller 110 may detect, as the display unchecking mode trigger, pressing of the home button 161a that lasts the predetermined time or longer in the locked state.

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIG. 10C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen. For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIG. 10C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIG. 10C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIG. 10C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIG. 10C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175.

For example, the predetermined execution trigger may be a touch on the touch screen. As an example, the touch may be held for a predetermined time or longer. For example, the controller 110 may detect a touch 310 lasting a predetermined time or longer (e.g., 2 seconds), corresponding to the predetermined execution trigger, as illustrated in FIGS. 10C.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, as illustrated in FIG. 10C, if the predetermined execution trigger is the touch 310 held for the predetermined time or longer, the controller 110 may set a voice input standby state as a predetermined action corresponding to the touch 310. The voice input standby state refers to a state in which voice input is prepared for. Therefore, upon input of a voice in the voice input standby state, the controller 110 may execute a command corresponding to the voice input. Upon detection of a touch 314 for voice input as illustrated in FIG. 10D, the controller 110 may receive a voice as illustrated in FIG. 10E. Upon detection of a drag of a voice icon 312 in FIG. 10D, the controller 110 may execute a voice controlled interface application as illustrated in FIG. 10F.

Accordingly, various embodiments of the present disclosure are advantageous in that a user can place a voice input standby state without viewing the display of the mobile device by switching the mobile device to the display unchecking mode.

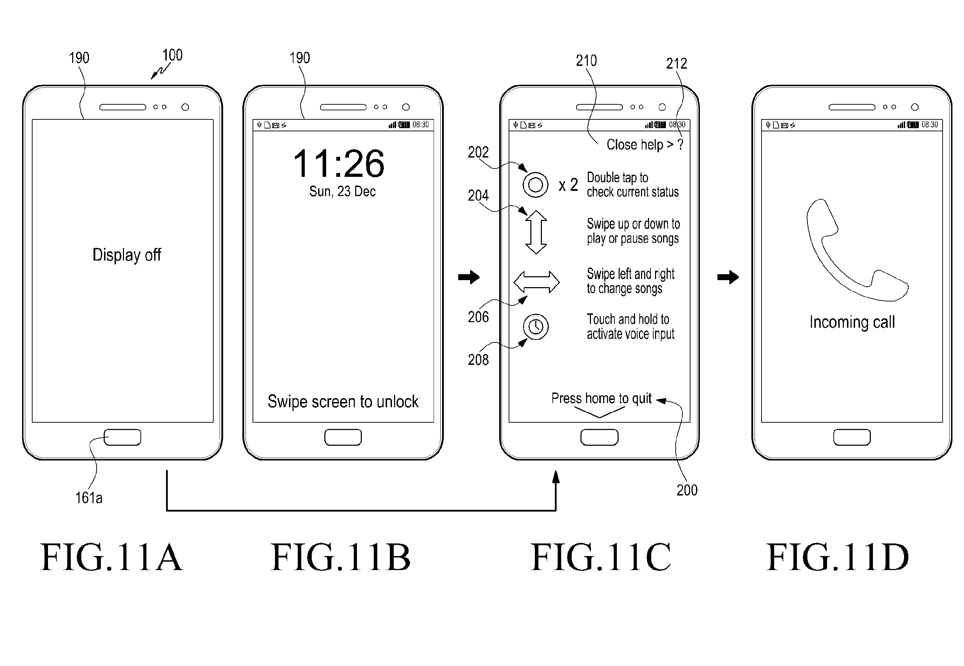

FIGS. 11A 11B, 11C, and 11D illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 11A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. For example, upon detection of an unlocking trigger, a swipe across the touch screen 190, the mobile device 100 may be unlocked. For example, as illustrated in FIG. 11B, the controller 110 may detect, as the display unchecking mode trigger, pressing of the home button 161a that lasts the predetermined time or longer in the locked state.

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIG. 11C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen. For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIG. 11C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIG. 11C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIG. 11C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIG. 11C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175.

For example, the predetermined execution trigger may be call incoming. For example, as illustrated in FIGS. 11C, the controller 110 may detect call incoming as the predetermined execution trigger.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, if the predetermined execution trigger is an incoming call in FIG. 11C, the controller 110 may execute an incoming call application as a predetermined action corresponding to the incoming call as illustrated in FIG. 11D.

Accordingly, various embodiments of the present disclosure are advantageous in that a user can execute an incoming call application without viewing the display of the mobile device by switching the mobile device to the display unchecking mode.

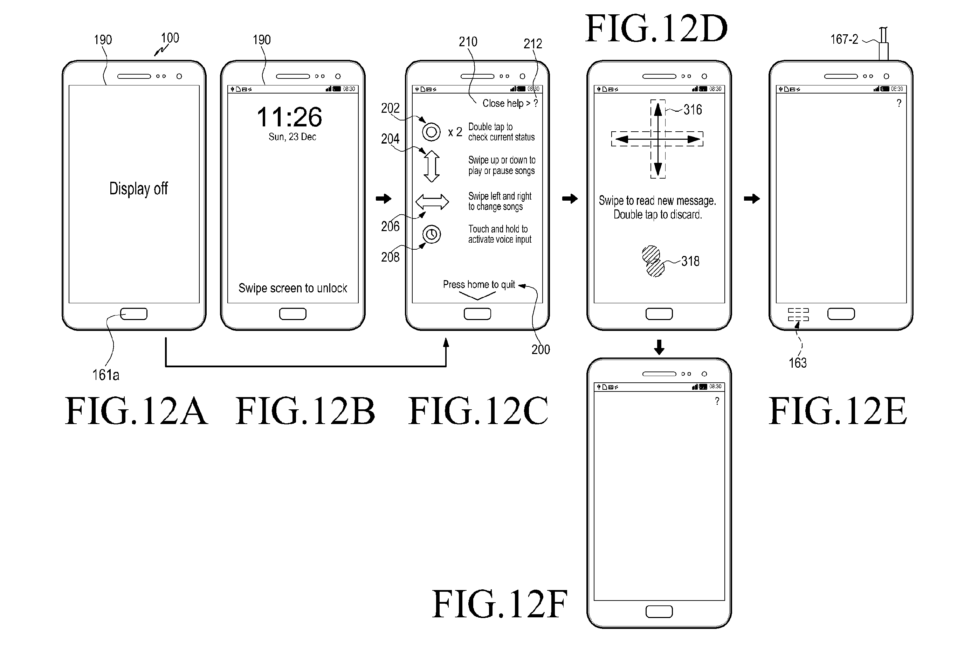

FIGS. 12A, 12B, 12C, 12D, 12E, and 12F illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 12A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. As an example, upon detection of an unlocking trigger, for example, a swipe across the touch screen 190, the mobile device 100 may be unlocked. For example, as illustrated in FIG. 12B, the controller 110 may detect, as the display unchecking mode trigger, pressing of the home button 161a that lasts the predetermined time or longer in the locked state.

Upon detection of the display unchecking mode trigger at operation 1010, the controller 110 may proceed to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIG. 12C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen. For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIG. 12C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIG. 12C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIG. 12C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIG. 12C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175.

For example, the predetermined execution trigger may be message reception and an upward, downward, leftward, or rightward swipe 316. For example, the controller 110 may detect message reception and an upward, downward, leftward, or rightward swipe 316, as the predetermined execution trigger, as illustrated in FIG. 12D.

In another example, the predetermined execution trigger may be message reception and a double tap. For example, the controller 110 may detect message reception and a double tap 318 as the predetermined execution trigger, as illustrated in FIG. 12D.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, if the predetermined execution trigger is message reception and an upward, downward, leftward, or rightward swipe in FIG. 12D, the controller 110 may perform voice reproduction of a received message, as illustrated in FIG. 12E. The controller 110 may perform voice reproduction of the received message through the earphone 167-2 or the speaker 163.

In another example, if the predetermined execution trigger is message reception and a double tap in FIG. 12D, the message reception may be ignored as illustrated in FIG. 12F. For example, the controller 110 may ignore the received message without executing any other action.

Accordingly, various embodiments of the present disclosure are advantageous in that a user can execute voice reproduction of a message without viewing the display of the mobile device by switching the mobile device to the display unchecking mode.

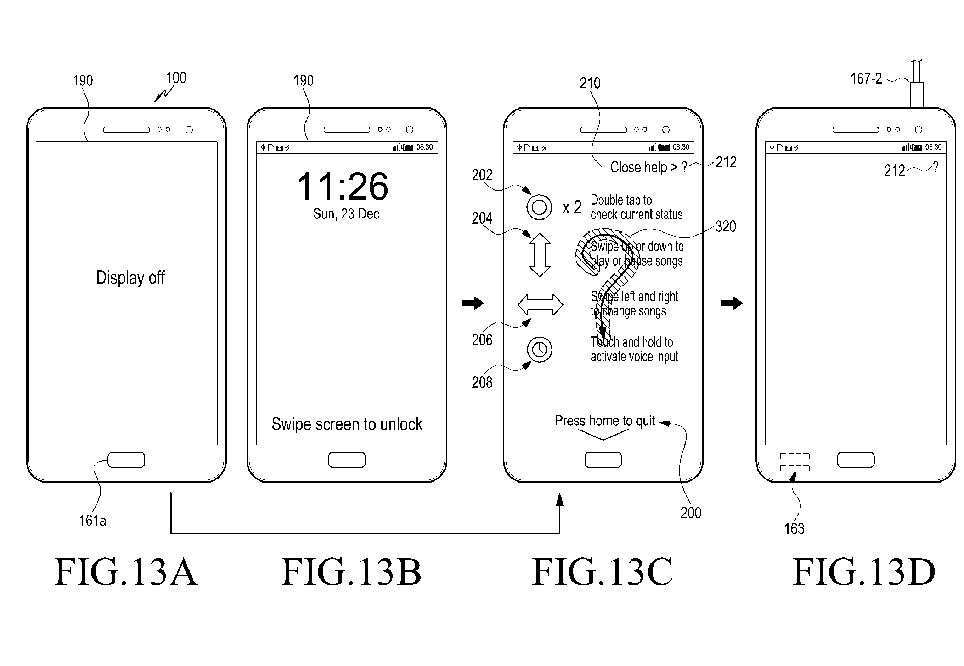

FIGS. 13A 13B, 13C, and 13D illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIG. 13A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. For example, upon detection of an unlocking trigger, a swipe across the touch screen 190, the mobile device 100 may be unlocked. For example, as illustrated in FIG. 13B, the controller 110 may detect, as the display unchecking mode trigger, pressing of the home button 161a that lasts the predetermined time or longer in the locked state.

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIG. 13C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen.

For example, the controller 110 may display, on the touch screen, the help indication 202 "double tap to check current status" indicating that the predetermined execution trigger is a double tap and the predetermined action corresponding to the predetermined execution trigger is reproduction of a voice message explaining the state of the mobile device, as illustrated in FIG. 13C. If the predetermined execution trigger is an upward or downward swipe, the controller 110 may display the help indication 204 "swipe up or down to play or pause songs" on the touch screen, which indicates that a predetermined action corresponding to the upward or downward swipe is execution or termination of a music application, as illustrated in FIG. 13C. If the predetermined execution trigger is a leftward or rightward swipe, the controller 110 may display the help indication 206 "swipe left or right to change songs" on the touch screen, which indicates that a predetermined action corresponding to the leftward or rightward swipe is play of the next or previous music, as illustrated in FIG. 13C. If the predetermined execution trigger is a touch held for a predetermined time or longer, the controller 110 may display the help indication 208 "touch and hold to activate voice input" on the touch screen, which indicates that a predetermined action corresponding to the touch held for the predetermined time or longer is entry into a voice input standby state, as illustrated in FIG. 13C.

At operation 1024, upon detection of a help remove trigger, the help indication is removed from the touch screen. Upon detection of the help remove trigger, the controller 110 removes the help indication from the touch screen. The help remove trigger may be selection of a help remove icon or no input for a predetermined time or longer. As illustrated in FIG. 13C, the help indications 202 to 208 are displayed on the touch screen. For example, upon selection of the help remove icon 210 corresponding to the help remove trigger, the controller 110 may remove the help indications 202 to 208 from the touch screen, as illustrated in FIG. 13D. In another example, if detecting the absence of any input for a predetermined time or longer, which corresponds to the help remove trigger, the controller 110 may remove the help indications 202 to 208 from the touch screen, as illustrated in FIG. 13D. For example, when a touch on the touch screen or pressing of a button in the mobile device has not been detected for a predetermined time (e.g., 3 seconds), the controller 110 may determine that no input has been received for the predetermined time.

At operation 1026, upon detection of a help re-display trigger, the help indication is re-displayed on the touch screen. Upon detection of the help re-display trigger, the controller 110 re-displays the help indication on the touch screen. The help re-display trigger may be selection of a help re-display icon. For example, upon selection of the help re-display icon 212 corresponding to the help re-display trigger as illustrated in FIG. 13D, the controller 110 may re-display the help indications 202 to 208 on the touch screen as illustrated in FIG. 13C.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175. For example, the predetermined execution trigger may be a touch on the touch screen.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

In contrast, if the controller determines that an input (e.g., a trigger) other than the predetermined execution trigger is detected at operation 1030, the controller 100 proceeds to operation 1042 at which, upon detection of a trigger other than the predetermined execution trigger in the display unchecking mode, the help explaining the predetermined execution trigger and the predetermined action is reproduced by voice. For example, upon detection of a trigger other than the predetermined execution trigger in the display unchecking mode, the controller 110 cannot execute the predetermined execution trigger and the predetermined action. Therefore, the controller 110 may reproduce the help explaining the predetermined execution trigger and the predetermined action by voice. For example, the controller 110 may display, on the touch screen, the help indication "double tap to check current status" indicating that the predetermined execution trigger is a double tap and the predetermined action corresponding to the predetermined execution trigger is reproduction of a voice message explaining the state of the mobile device. If the predetermined execution trigger is an upward or downward swipe, the controller 110 may display the help indication "swipe up or down to play or pause songs" on the touch screen, which indicates that a predetermined action corresponding to the upward or downward swipe is execution or termination of a music application. If the predetermined execution trigger is a leftward or rightward swipe, the controller 110 may display the help indication "swipe left or right to change songs" on the touch screen, which indicates that a predetermined action corresponding to the leftward or rightward swipe is play of the next or previous music. If the predetermined execution trigger is a touch held for a predetermined time or longer, the controller 110 may display the help indication "touch and hold to activate voice input" on the touch screen, which indicates that a predetermined action corresponding to the touch held for the predetermined time or longer is entry into a voice input standby state.

According to various embodiments of the present disclosure, if an input 320 is input on the touch screen, the controller 110 may execute the predetermined action corresponding to the predetermined execution trigger. For example, if the input 320 corresponds to a swipe in the shape of a question mark, the controller 110 may execute a help functionality. For example, upon detection of input 320, the help explaining the predetermined execution trigger and the predetermined action may be reproduced by voice, as illustrated in FIG. 13D.

Accordingly, various embodiments of the present disclosure are advantageous in that if a predetermined execution trigger is not detected in the display unchecking mode, a help explaining a predetermined action corresponding to the predetermined execution trigger is output by voice.

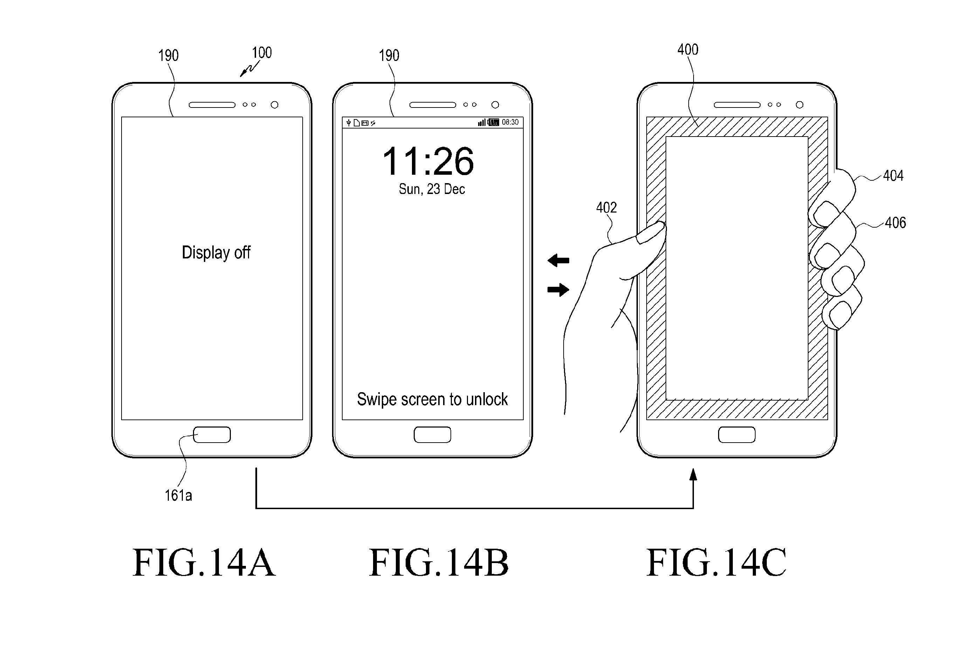

FIGS. 14A, 14B, 14C, 15A, 15B, 15C, 15D, 16A, 16B, 16C, and 16D illustrate an operation in a method of controlling a mobile device that executes an action in a display unchecking mode according to an embodiment of the present disclosure.

Referring to FIG. 4 again, according to various embodiments of the present disclosure, at operation 1010, a display unchecking mode trigger is detected in the method of controlling a mobile device that executes an action in a display unchecking mode. The controller 110 of the mobile device 100 may detect the display unchecking mode trigger. The controller 110 may detect the display unchecking mode trigger in at least one of an earphone connected state, a standby state, a locked state, and an application execution state. As an example, the display unchecking mode trigger may be pressing of the home button 161 a for a predetermined time or longer. Thus, the controller 110 may detect, as the display unchecking mode trigger, pressing of the home button 161a that lasts the predetermined time or longer.

For example, the controller 110 may detect, as the display unchecking mode trigger, pressing of the home button 161a that lasts the predetermined time or longer in the standby state. The standby state refers to a standby state of the mobile device 100, in which nothing is displayed on the display of the mobile device 100 (e.g., a display-off state). For example, as illustrated in FIGS. 14A, 15A and 16A, the controller 110 may detect, as the display unchecking mode trigger, pressing of the home button 161a that lasts the predetermined time or longer in the standby state.

In another example, the controller 110 may detect, as the display unchecking mode trigger, pressing of the home button 161a that lasts the predetermined time or longer in the locked state. The locked state refers to a locked state of the mobile device 100, in which any function of the mobile device 100 other than a predetermined function is disabled. As an example, upon detection of an unlocking trigger, a swipe across the touch screen 190, the mobile device 100 may be unlocked. For example, as illustrated in FIGS. 14A, 15A and 16A, the controller 110 may detect, as the display unchecking mode trigger, pressing of the home button 161a that lasts the predetermined time or longer in the locked state.

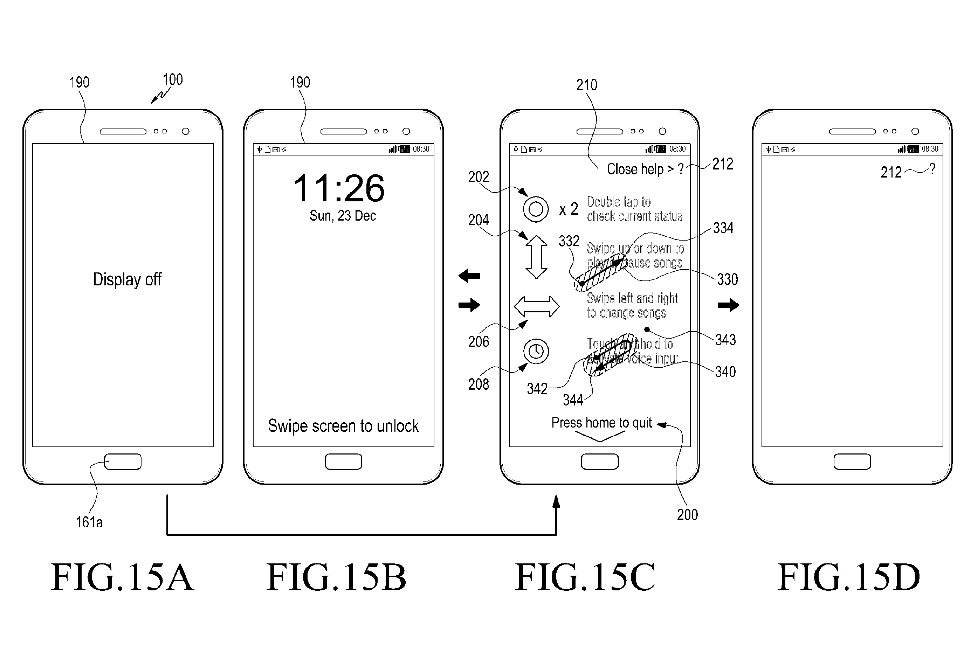

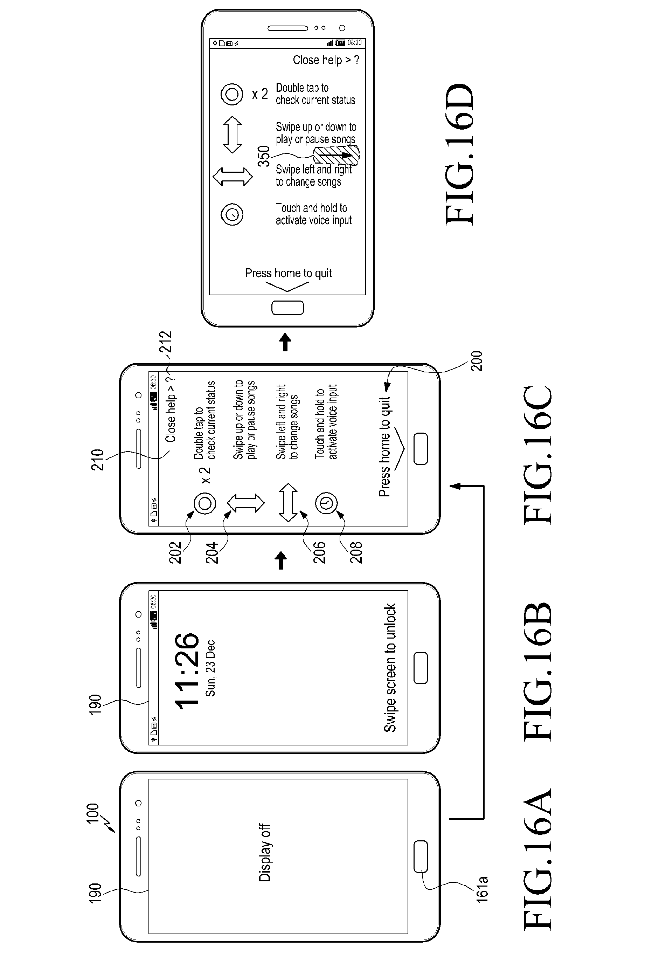

Upon detection of the display unchecking mode trigger at operation 1010, the controller 110 proceeds to operation 1020 at which the mobile device enters the display unchecking mode. Upon detection of the display unchecking mode trigger, the controller 110 may switch the mobile device 100 to the display unchecking mode. The display unchecking mode refers to a mode in which a user can control the mobile device without viewing the display of the mobile device. As illustrated in FIGS. 15C and 16C, the controller 110 may exit the display unchecking mode upon detection of an input 200. For example, the input may be a preset input to the home button 161a or the like.

Thereafter, at operation 1022, a help indication that explains the predetermined execution trigger and the predetermined action is displayed on the touch screen. The controller 110 displays the help indication that explains the predetermined execution trigger and the predetermined action on the touch screen.

Thereafter, at operation 1030, the controller 110 determines whether a predetermined execution trigger is detected in the display unchecking mode. The controller 110 detects the predetermined execution trigger in the display unchecking mode. The execution trigger may be predefined and stored in the memory 175 of the mobile device. The predetermined execution trigger may be mapped. The mapping may be performed based on a trigger frequently used in the mobile device or a trigger frequently used in a currently executed application. The use frequency and information of the trigger frequently used in the mobile device or the trigger frequently used in a currently executed application may be pre-stored and managed in the memory 175. For example, the predetermined execution trigger may be a touch on the touch screen.

The controller 110 may ignore a touch on an edge of the touch screen. For example, the controller 110 may ignore a touch on an edge 400 of the touch screen, as illustrated in FIG. 14C. For example, because when the user does not view the touch screen 901 of the mobile device 100, the user carries the mobile device 100 in a pocket, the user may touch the edge 400 of the touch screen 190 with the user's thumb 402 and/or fingers 404 and 406. Because the touch on the edge 400 of the touch screen 190 is not intended, the controller 110 may ignore the touch on the edge 400 of the touch screen 190.

The predetermined execution trigger may be a swipe, drag, or flick from a first point to a second point on the touch screen and the first point may be near to the left or right side of the touch screen. For example, if the user is left-handed, the user is highly likely to touch the left side of the touch screen. Therefore, the predetermined execution trigger may be a swipe, drag, or flick 330 from a first point 332 to a second point 334 on the touch screen and the first point 332 may be near to the left side of the touch screen.

If the swipe, drag, or flick starting from the first point does not reach the second point, the predetermined execution trigger may not be detected. For example, when the swipe, drag, or flick starting from the first point does not reach the second point, the controller 110 may determine that the predetermined execution trigger has not been detected. For example, if the swipe, drag, or flick 340 starting from the first point 342 does not reach the second point 343, the controller 110 may determine that the predetermined execution trigger has not been detected, as illustrated in FIG. 15C. Accordingly, if the user does not want to input the predetermined execution trigger, the user may not swipe, drag, or flick to the second point. As another example, the if the swipe, drag, or flick 340 starting from the first point 342 reaches the second point 343 but does not stop at the second point and instead proceeds to point 344 (e.g., substantially corresponding to a return to point 342), the controller 110 may determine that the predetermined execution trigger has been detected, as illustrated in FIG. 15C.

In the case in which the predetermined trigger is a swipe, drag, or flick in a first direction, if an orientation of the mobile device is detected and a swipe, drag, or flick in a second direction is detected, the controller 110 may consider the swipe, drag, or flick in the second direction as the swipe, drag, or flick in the first direction, taking into account the orientation of the mobile device. For example, the controller 110 may detect the predetermined trigger in consideration of the orientation of the mobile device. For example, if the mobile device is inclined to a landscape mode as illustrated in FIG. 16D and a downward swipe in the second direction is detected, the controller 110 may consider the downward swipe as a rightward swipe corresponding to the first direction, taking into account the orientation of the mobile device. Accordingly, even though the user carries the mobile device inclined to the landscape mode in a pocket, the user may input the same rightward swipe.

If the controller 110 determines that the predetermined execution trigger is detected at operation 1030, the controller 110 proceeds to operation 1040 at which, upon detection of the predetermined execution trigger, a predetermined action corresponding to the predetermined execution trigger is executed. Upon detection of the predetermined execution trigger, the controller 110 executes the predetermined action corresponding to the predetermined execution trigger.

For example, if the predetermined execution trigger is a rightward swipe, the controller 110 may play the previous music as a predetermined action corresponding to the rightward swipe. For example, if the predetermined execution trigger is a rightward swipe, the controller 110 may play the previous music as a predetermined action corresponding to the rightward swipe.

According to various embodiments of the present disclosure, the predetermined execution trigger may correspond to an orientation or motion of the mobile device. Further, according to various embodiments of the present disclosure, the predetermined trigger may be detected in consideration of the orientation of the mobile device. For example, as illustrated in FIG. 16D, if the predetermined execution trigger is a rightward swipe when the mobile device is in portrait mode, then the rightward swipe may correspond to a downward swipe 350 when the mobile device is oriented in a landscape mode.

Accordingly, various embodiments of the present disclosure are advantageous in that a touch on an edge of the touch screen can be ignored, a predetermined execution trigger can be input or cancelled based on whether a touch reaches a predetermined point, and the predetermined trigger can be detected in consideration of an orientation of the mobile device by switching the mobile device to the display unchecking mode.

As is apparent from the above description of the various embodiments of the present disclosure, a user can control a mobile device without viewing a display of the mobile device by switching the mobile device to a display unchecking mode.

It will be understood that the various embodiments of the present disclosure can be implemented in hardware, software, or a combination thereof. The software may be stored in a volatile or non-volatile memory device like a ROM irrespective of whether data is deletable or rewritable, in a memory like a RAM, a memory chip, a device, or an integrated circuit, or in a storage medium to which data can be recorded optically or magnetically and from which data can be read by a machine (e.g. a computer), such as a CD, a DVD, a magnetic disk, or a magnetic tape. Further, the various embodiments of the present disclosure can be implemented in a computer or portable terminal that has a controller and a memory, and the memory is an example of a non-transitory machine-readable storage medium suitable for storing a program or programs including commands to implement the various embodiments of the present disclosure. Accordingly, the present disclosure includes a program having a code for implementing the apparatuses or methods defined by the claims and a non-transitory storage medium readable by a machine that stores the program. The program can be transferred electronically through a medium such as a communication signal transmitted via a wired or wireless connection, which and the equivalents of which are included in the present disclosure.

The mobile device can receive the program from a program providing device connected by cable or wirelessly and store it. The program providing device may include a program including commands to implement the various embodiments of the present disclosure, a memory for storing information required for the various embodiments of the present disclosure, a communication module for communicating with the mobile device by cable or wirelessly, and a controller for transmitting the program to the mobile device automatically or upon request of the mobile device.

While the present disclosurehas been shown and described with reference to various embodiments thereof, it will be understood by those skilled in the art that various changes in form and details may be made therein without departing from the spirit and scope of the present disclosureas defined by the appended claims and their equivalents.

## Claims

1. A method of controlling a mobile device that executes an action in a display unchecking mode, the method comprising:
detecting a display unchecking mode trigger;
entering into the display unchecking mode,;
detecting a predetermined execution trigger; and
executing a predetermined action corresponding to the predetermined execution trigger.

2. The method of claim 1, wherein the detecting of the display unchecking mode trigger comprises:
detecting the display unchecking mode trigger when the mobile device is in at least one of an earphone connected state, a standby state, a locked state, and an application execution state.

3. The method of claim 1, wherein the display unchecking mode trigger is pressing of a home button for a predetermined time.

4. The method of claim 1, wherein the entering into the display unchecking mode comprises:
displaying,on a touch screen, a help indication that explains the predetermined execution trigger and the predetermined action.

5. The method of claim 1, wherein, if the predetermined execution trigger is a leftward or rightward swipe, a predetermined action corresponding to the leftward or rightward swipe is a play of a next or previous music, and
wherein, if the predetermined execution trigger is an upward or downward swipe, a predetermined action corresponding to the upward or downward swipe is execution or termination of a music application.

6. The method of claim 1, wherein, if the predetermined execution trigger is a touch held for a predetermined time or longer, a predetermined action corresponding to the touch held for the predetermined time or longer is execution of a voice input standby state, and
wherein, if the predetermined execution trigger is a drag of a voice icon, a predetermined action corresponding to the drag of the voice icon is execution of a voice-controlled interface application.

7. The method of claim 1, wherein, if the predetermined execution trigger is an incoming call, a predetermined action corresponding to the incoming call is execution of an incoming call application.

8. The method of claim 1, wherein, if the predetermined execution trigger is a combination of a message reception, and an upward, downward, leftward, or rightward swipe, a predetermined action corresponding to the combination of the message reception and the upward, downward, leftward, or rightward swipe is voice reproduction of a received message, and
wherein, if the predetermined execution trigger is a combination of a message reception and a double tap, a predetermined action corresponding to the combination of the message reception and the double tap is to ignore the message reception.

9. The method of claim 1, further comprising:
upon detection of a trigger other than the predetermined execution trigger in the display unchecking mode, performing voice reproduction of a help explaining the predetermined execution trigger and the predetermined action.

10. The method of claim 1, wherein the detecting of the predetermined execution trigger in the display unchecking mode comprises:
ignoring a touch on an edge of a touch screen.

11. A mobile device of executing an action in a display unchecking mode, the mobile device comprising:
a controller configured to detect a display unchecking mode trigger, to enter into the display unchecking mode, , to detect a predetermined execution trigger, and to execute a predetermined action corresponding to the predetermined execution trigger,;
a touch screen configured to display a screen of the mobile device; and
a memory configured to store information about the predetermined action corresponding to the predetermined execution trigger.

12. The mobile device of claim 11, wherein the predetermined action corresponding to the predetermined execution trigger is determined based on a user information log of a user, determined in relation to a currently executed application, determined as execution of a switching function corresponding to a state of the mobile device, or predefined and stored in a memory of the mobile device.

13. The mobile device of claim 11, wherein the predetermined execution trigger is a double tap, and
wherein the predetermined action corresponding to the predetermined execution trigger is reproduction of a voice message explaining a state of the mobile device.

14. The mobile device of claim 11, wherein, when the controller detects the predetermined execution trigger in the display unchecking mode, if the predetermined execution trigger is a swipe, drag, or flick from a first point to a second point on a touch screen, the first point is near to a left or right side of the touch screen, and the swipe, drag, or flick does not reach the second point, the controller determines that the predetermined execution trigger is not detected.

15. The mobile device of claim 11, wherein when the controller detects the predetermined execution trigger in the display unchecking mode, if the predetermined execution trigger is a swipe, drag, or flick in a first direction, an orientation of the mobile device is detected, and a swipe, drag, or flick in a second direction is detected, the controller determines the detected swipe, drag, or flick in the second direction as the swipe, drag, or flick in the first direction, taking into account the orientation of the mobile device.
